# EUROPEAN PATENT APPLICATION

(11) **EP 4 618 247 A1**
(43) Date of publication of application: **17.09.2025**
(21) Application number: 24852231.0
(22) Date of filing: 02.08.2024
(51) Int. Cl.: H01M 10/617, H01M 50/502, H01M 50/284, H01M 50/264, H01M 50/211, H01M 10/6557, H01M 10/613

(54) **BATTERY MODULE AND BATTERY PACK COMPRISING SAME**

(30) Priority: 07.08.2023 KR 20230102709
(71) Applicant: LG Energy Solution, Ltd., Seoul 07335 (KR)
(72) Inventor: LEE, Jung Hoon, Daejeon 34122 (KR); UM, Taeki, Daejeon 34122 (KR); YUN, Hyeonki, Daejeon 34122 (KR); KIM, Hyun Jung, Daejeon 34122 (KR); KIM, Dooseung, Daejeon 34122 (KR)
(74) Representative: Plasseraud IP
(86) International application number: PCT/KR2024/011436
(87) International publication number: WO 2025/033877

(57) **Abstract**

A battery module according to the present disclosure includes: at least one sub-module that comprises a battery cell stack in which a plurality of battery cells are stacked, and a busbar assembly containing a busbar electrically connected to the battery cell stack and a busbar frame covering the battery cell stack from at least one side, respectively; a module frame in which at least one of the sub-module is housed; and a fixing frame that is located while covering at least one surface of the battery cell stack.

## Description

### [TECHNICAL FIELD]

### Cross Citation with Related Application(s)

This application claims the benefit of Korean Patent Application No. 10-2023-0102709 filed on August 7, 2023 in the Korean Intellectual Property Office, the disclosure of which is incorporated herein by reference in its entirety.

The present disclosure relates to a battery module and a battery pack including the same, and more particularly, to a battery module having improved cooling performance deviation, mechanical reliability, and safety, and a battery pack including the same.

### [BACKGROUND]

As technology development and demands for mobile devices increase, the demand for secondary batteries as energy sources is rapidly increasing. A lot of researches on secondary batteries capable of meeting various needs have been carried out accordingly.

A secondary battery has attracted considerable attention as an energy source for powerdriven devices, such as an electric bicycle, an electric vehicle, and a hybrid electric vehicle, as well as an energy source for mobile devices, such as a mobile phone, a digital camera, and a laptop computer.

Recently, along with a continuous rise of the necessity for a large-capacity secondary battery structure, including the utilization of the secondary battery as an energy storage source, there is a growing demand for a battery pack of a medium or large-sized module structure which is an assembly of battery modules in which a plurality of secondary batteries are connected in series/parallel.

Meanwhile, when a plurality of battery cells are connected in series or in parallel to configure a battery pack, it is common to configure a battery module composed of at least one battery cell first and then configure a battery pack by using at least one battery module and adding other components.

Since battery cells constituting such a medium or large-sized battery module are composed of secondary batteries which can be charged and discharged, such a high-output large-capacity secondary battery generates a large amount of heat in a charge and discharge process. In this case, heat generated from multiple battery cells can be added up in a narrow space, so that the temperature can rise more quickly and excessively. In other words, battery modules in which multiple battery cells are stacked and a battery pack equipped with these battery modules can obtain high output, but it is not easy to remove heat generated from the battery cells during charge and discharge. When the heat dissipation of battery cells is not properly performed, deterioration of the battery cells is accelerated, the life is shortened, and the possibility of explosion or ignition increases.

Moreover, in the case of a battery module included in a vehicle battery pack, it is frequently exposed to direct sunlight and may be placed under high-temperature conditions such as summer or desert areas. Further, since multiple battery modules are concentratedly arranged to increase the mileage of the vehicle, a flame or heat generated in any one of the battery modules can easily propagate to an adjacent battery module, which may eventually lead to ignition or explosion of the battery pack itself.

Therefore, in order to overcome the above problems, at least two sub-modules may be electrically connected to form one long module, and a coolant such as insulating oil may be injected into the long module to directly cool the battery cells. Herein, the sub-module is a module in which a busbar assembly is mounted on a battery cell stack, and may mean components excluding the module frame in a conventional general battery module. The long module may also be equipped with a printed circuit board (PCB) that senses the battery cells, and the printed circuit board may be located to extend in the longitudinal direction of the battery cells along the central portion of the battery cell stack constituting the sub-modules.

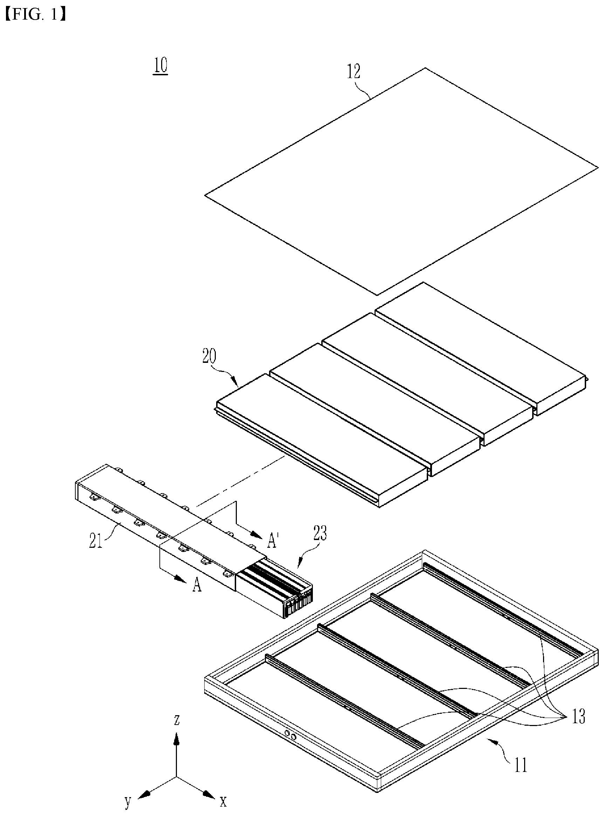

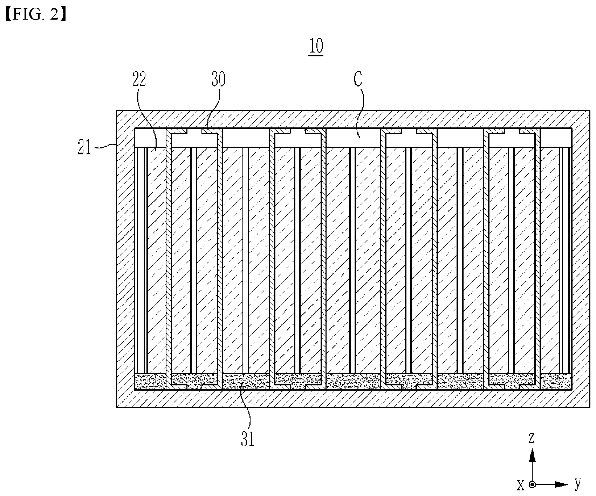

FIG. 1 is an exploded perspective view of a conventional battery pack including a long module. FIG. 2 is a cross-sectional view taken along line A-A' of FIG. 1.

Referring to FIG. 1, a battery pack 10 includes a lower pack frame 11 on which a long module 20 is mounted, an upper pack frame 12 that is located on an upper portion of the long module 20, and an internal beam 13 that partitions a position where the long module 20 is mounted within the battery pack 10.

As described above, the battery module 20 is electrically connected to at least two battery cell stacks 23 formed by stacking a plurality of battery cells 22, and can be housed and located in the module frame 21.

Referring to FIG.2, the plurality of battery cells 22 housed in the long module 20 can be located while being in contact with the cooling fins 30 that are in contact with an upper surface (z-axis direction) and a lower surface (-z-axis direction) of the module frame 21. Specifically, the plurality of battery cells 22 are fixed and located at the central portion of the cooling fins 30, and can be located so as to be floated within the module frame 20 of the battery module while having a certain height from the upper surface (z-axis direction) and the lower surface (-z-axis direction) of the module frame 21.

However, in this structure, the battery cells 22 themselves are not adhesively fixed to the module frame 21, and therefore, when a physical impact is applied from the outside, there may be a problem that the mechanical structure becomes fragile, and the battery cells 22 are separated and broken from the cooling fins 30.Therefore, it is necessary to improve an adhesive strength between the battery cell 22 and the module frame 21 and ensure structural stability, and for this purpose, an adhesive 31 may be provided between a lower portion (-z-axis direction) of the battery cell 22 and a lower surface (-z-axis direction) of the module frame 21.

In this case, the bottom portion of the battery cell 22 and the module frame 21 are adhesively fixed and located by the adhesive 31, so that the structural stability of the battery cell 22 can be improved, however, there is a problem that a coolant C cannot flow into the space where the adhesive 31 is located, and thus, the cooling performance is reduced. At this time, the coolant C can flow only into the space between the upper portion (z-axis direction) of the battery cells 22 and the upper surface (z-axis direction) of the module frame 21.

Therefore, there is a need to develop a battery module and a battery pack that have improved cooling performance while achieving the structural stability of the battery cells 22.

### [DETAILED DESCRIPTION OF THE INVENTION]

### [Technical Problem]

It is an object of the present disclosure to provide a battery module improved in cooling performance deviation and mechanical reliability and thus enhanced in safety, and a battery pack including the same.

However, the problems to be solved by embodiments of the present disclosure are not limited to the above-described problems, and can be variously expanded within the scope of the technical idea included in the present disclosure.

### [Technical Solution]

According to an embodiment of the present disclosure, there is provided a battery module comprising: at least one sub-module that comprises a battery cell stack in which a plurality of battery cells are stacked, and a busbar assembly containing a busbar electrically connected to the battery cell stack and a busbar frame covering the battery cell stack from at least one side, respectively; a module frame in which the at least one of the sub-module is housed; and a fixing frame that is located while covering at least one surface of the battery cell stack.

The at least one sub-module may include a first sub-module and a second sub-module electrically connected to each other.

One end of the first sub-module and the other end of the second sub-module may be electrically connected to each other.

The battery module may comprise an adhesive member located on the one surface of the battery cell stack.

The fixing frame may be located on the one surface of the battery cell stack to which the adhesive member is applied.

The fixing frame comprises a fixing plate covering the one surface of the battery cell stack, wherein the fixing plate may comprise a plurality of fixing holes penetrating the fixing plate.

The fixing holes are formed long in a stacking direction of the battery cells, and may be located in plural numbers in the longitudinal direction of the battery cells.

The fixing frame further comprises a side cover portion that covers a surface located vertically with the one surface of the battery cell stack, and the side cover portion may be an area that protrudes perpendicularly in the height direction of the battery cell stack along an edge of the fixing plate.

The adhesive member may be located at the central portion of the one surface of the battery cells.

When the first sub-module and the second sub-module are inserted into the module frame, the one surface of the battery cell stacks where the adhesive member is located may be located toward a direction opposite to gravity.

After the first sub-module and the second sub-module are inserted into the module frame, the module frame is turned upside down so that a bottom portion of the module frame and the adhesive member are located toward the direction of gravity, and the adhesive member may be fixedly adhered to the bottom portion of the module frame.

The adhesive member may move through the fixing hole penetrating the fixing frame to be fixedly adhered to the bottom portion of the module frame.

The battery module may further comprise a cooling spacer provided between the battery cells.

The cooling spacer may comprise a cooling plate which is a plate extending in the longitudinal direction of the battery cells, and a plurality of cooling holes penetrating the cooling plate.

A length of the cooling plate may be equal to a length of the battery cells, and a height of the cooling plate may be equal to or greater than a height of the battery cells.

The battery module comprises: a sealing assembly covering both open ends of the module frame; and an end plate covering the sealing assembly, wherein the sealing assembly includes an inlet and an outlet through which a coolant flows into the module frame and flows out of it, and wherein the coolant may come into direct contact with the battery cell stack and other electrical components housed within the module frame.

According to another embodiment of the present disclosure, there is provided a battery pack comprising the above-mentioned battery module.

### [Advantageous Effects]

According to embodiments, a battery module is improved in cooling performance deviation and enhanced in mechanical reliability, thereby achieving the safety.

Effects of the present disclosure are not limited to the effects mentioned above, and additional other effects not mentioned herein will be clearly understood from the description of the appended claims by those skilled in the art.

### [BRIEF DESCRIPTION OF THE DRAWINGS]

FIG. 1 is an exploded perspective view of a conventional battery pack including a long module.
FIG. 2 is a cross-sectional view taken along line A-A' of FIG. 1.
FIG. 3 is a perspective view of a battery pack according to an embodiment of the present disclosure.
FIG. 4 is an exploded perspective view of the battery pack of FIG. 3.
FIG. 5 is a perspective view of a battery module according to an embodiment of the present disclosure.
FIG. 6 is an exploded perspective view of the battery module of FIG. 5.
FIG. 7 is a perspective view of the battery module excluding the module frame of FIG. 5.
FIG. 8 is an exploded view of a sub-module according to an embodiment of the present disclosure.
FIG. 9 is a cross-sectional view taken along line B-B' of FIG. 5.
FIG. 10 is a perspective view of the battery module excluding the module frame of FIG. 5.
FIG. 11 is an exploded perspective view of FIG. 10.
FIG. 12 is a diagram showing that the sub-modules of FIG. 10 is inserted into the module frame.
FIG. 13 is a cross-sectional view taken along line C-C' of FIG. 12.

### [DETAILED DESCRIPTION OF THE EMBODIMENTS]

Hereinafter, various embodiments of the present disclosure will be described in detail with reference to the accompanying drawings so that those skilled in the art can easily implement them. The present disclosure may be modified in various different ways, and is not limited to the embodiments set forth herein.

Portions that are irrelevant to the description will be omitted to clearly describe the present disclosure, and like reference numerals designate like elements throughout the specification.

Further, in the figures, the size and thickness of each element are arbitrarily illustrated for convenience of description, and the present disclosure is not necessarily limited to those illustrated in the figures. In the figures, the thickness of layers, regions, etc. are exaggerated for clarity. In the figures, for convenience of description, the thicknesses of some layers and regions are shown to be exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity.

Further, throughout the specification, when a portion is referred to as "including" a certain component, it means that the portion can further include other components, without excluding the other components, unless otherwise stated.

Further, throughout the description, when referred to as "planar", it means when a target portion is viewed from the upper side, and when it is referred to as "cross-sectional", it means when a target portion is viewed from the side of a cross section cut vertically.

The terms first, second, etc. may be used herein to describe various components, but the components are not to be limited by the terms. The terms may only be used for the purpose of distinguishing one component from another.

Further, in this application, the upper portion and the lower portion may be defined as meaning the z-axis direction and the -z-axis direction, the side surface as meaning the y-axis direction and the -y-axis direction, and the front surface and the rear surface as meaning the x-axis direction and the -x-axis direction, respectively. However, these names are arbitrarily defined within the specification for convenience, and the scope of rights is not limited to such names and directions.

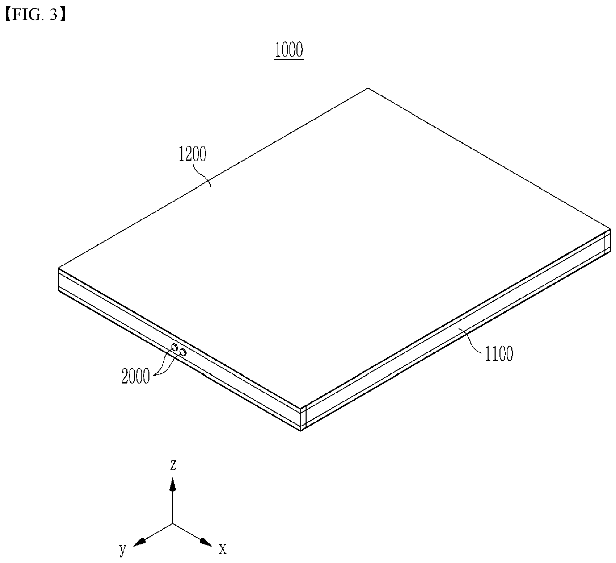

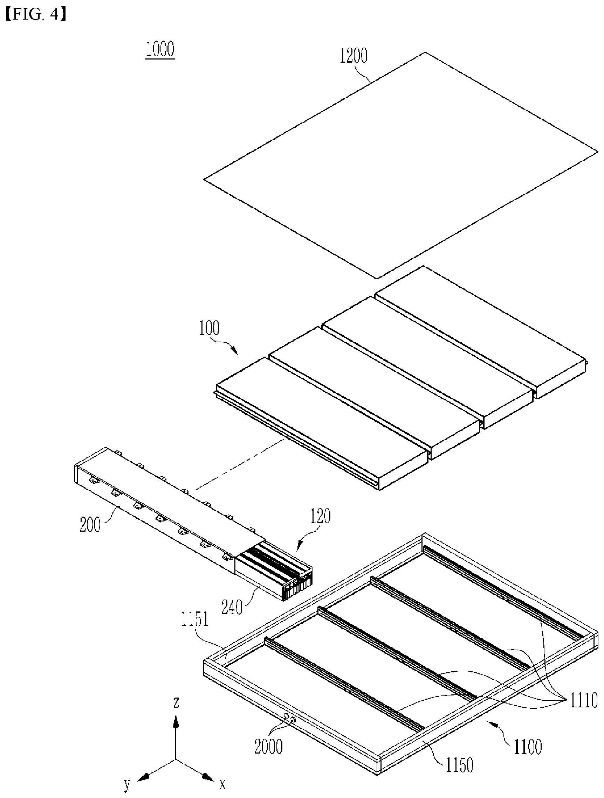

FIG. 3 is a perspective view of a battery pack according to an embodiment of the present disclosure. FIG. 4 is an exploded perspective view of the battery pack of FIG. 3.

Referring to FIGS. 3 and 4, a battery pack 1000 according to an embodiment of the present disclosure comprises a lower pack frame 1100 on which a plurality of battery modules 100 are mounted, an upper pack frame 1200 located at an upper portion of the battery module 100, and at least one venting portion 2000 provided on a side surface of the lower pack frame 1100. Here, the lower pack frame 1100 and the upper pack frame 1200 may be coupled to each other by a method such as welding to seal the inside of the battery pack 1000.

The battery module 100 may include a battery cell stack 120 in which a plurality of battery cells are stacked along a preset direction, and a module frame 200.The module frame 200 may be a mono frame in a metal plate shape in which the upper and lower surfaces (z-axis direction and - z-axis direction) and both side surfaces (y-axis direction and -y-axis direction) are integrated. The battery cell stack 120 may be mounted inside the module frame 200 to form the battery module 100.

The lower pack frame 1100 includes a side pack frame 1150 and at least two internal beams 1110 formed on a bottom surface of the lower pack frame 1100.Here, the bottom surface of the lower pack frame 1100 and the at least two internal beams 1110, and the bottom surface of the lower pack frame 1100 and the side pack frame 1150 may be coupled to each other by a method such as welding.

A plurality of battery modules 100 may be mounted to an area partitioned from each other by a side pack frame 1150 and at least two internal beams 1110.In other words, a plurality of battery modules 100 may be respectively arranged in an area between the side pack frame 1150 and the internal beams 1110, and an area located between the internal beams 1110 adjacent to each other. More specifically, in the battery pack 1000, a battery module 100 may be arranged between a pair of internal beams 1110 located adjacent to each other among the plurality of internal beams 1110 and the side pack frame 1150.

Accordingly, the plurality of battery modules 100 are surrounded by at least two internal beams 1110 and the side pack frame 1150, so that each battery module 100 can be protected from external impacts.

The side pack frame 1150 may be arranged at the edge of the bottom surface of the lower pack frame 1100, and may be extended to an upper portion (in the z-axis direction) from the bottom surface of the lower pack frame 1100.More specifically, it may be extended toward the upper portion from each edge of the bottom surface of the lower pack frame 1100. Here, the upper end of the side pack frame 1150 may be in contact with the upper pack frame 1200.At this time, the upper end of the side pack frame 1150 and the upper pack frame 1200 may be coupled to each other by a method such as welding, thereby sealing the inside of the battery pack 1000.

The plurality of internal beams 1110 may be spaced apart from each other. Here, the separation distance between internal beams 1110 adjacent to each other may be equal to or greater than the size of the battery module 100.

Further, the end of the internal beam 1110 may be in contact with the inner surface 1151 of the side pack frame 1150. More specifically, both ends of the internal beam 1110 may be in contact with the inner surface 1151 of the side pack frame 1150, respectively.

The venting portion 2000 can be formed in one area of the side pack frame 1150 to discharge high-temperature gas or flames generated inside the battery pack 1000 to the outside, thereby achieving the safety of the battery.

Next, a battery module 100 according to an embodiment of the present disclosure will be described in detail.

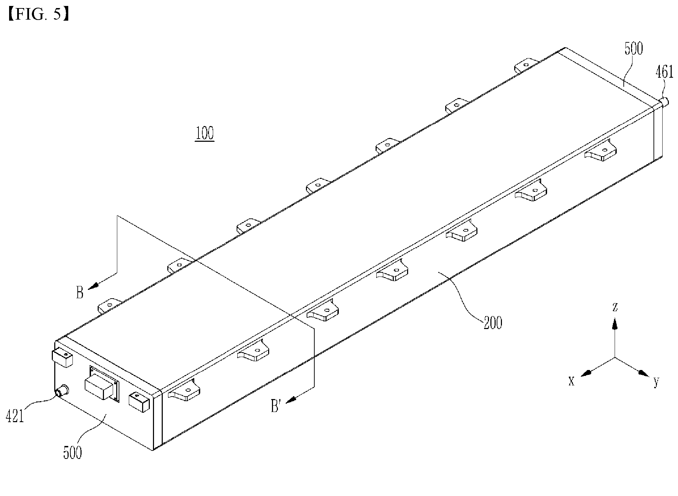

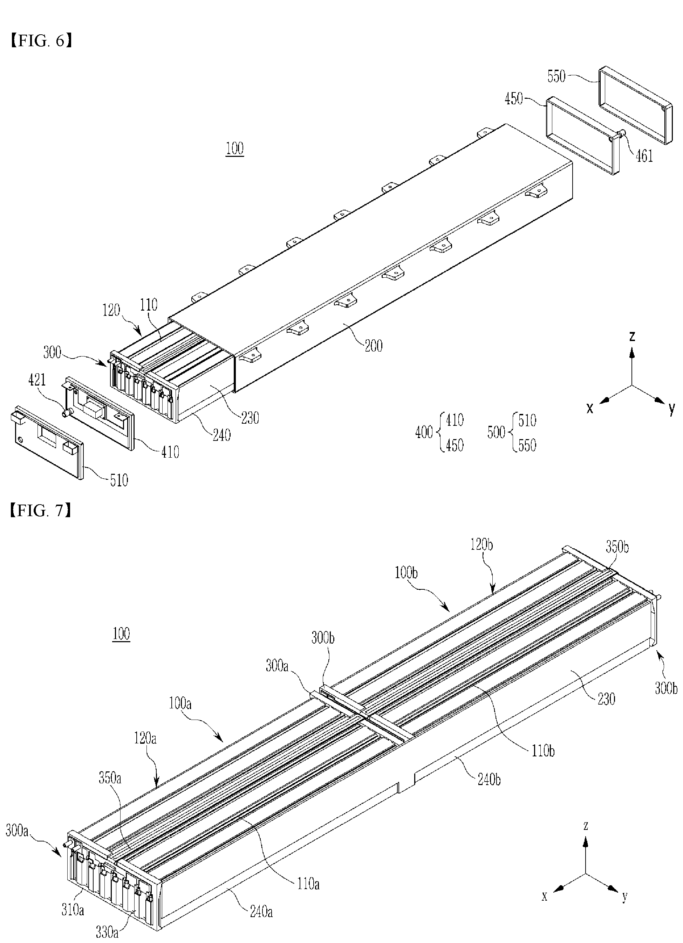

FIG. 5 is a perspective view of a battery module according to an embodiment of the present disclosure. FIG. 6 is an exploded perspective view of the battery module of FIG. 5.

Referring to FIGS. 5 and 6, the battery module 100 according to an embodiment of the present disclosure may be a module in which conventional general battery cell stack are electrically connected to each other to form one battery module 100. Specifically, the battery module 100 of the present embodiment may be a module in which one end and the other end of each battery cell stack constituting two conventional battery modules are electrically connected.

The battery module 100 comprises a battery cell stack 120 in which a plurality of battery cells 110 are stacked, a module frame 200 that houses the battery cell stack 120, a side plate 230 covering both side surfaces of the battery cell stacks 120, a fixing frame 240 covering at least one surface of the battery cell stack 120, a busbar assembly 300 located on a front surface and/or a rear surface of the battery cell stack 120, a sealing assembly 400 that covers a front surface and/or a rear surface of the busbar assembly 300, and an end plate 500 that covers a front surface and/or a rear surface of the sealing assembly 400.

First, the battery cell 110 may be a pouch-type battery cell. Such a pouch-type battery cell may be formed by housing an electrode assembly in a pouch case made of a laminate sheet including a resin layer and a metal layer, and then heat-fusing a sealing portion of the pouch case. In this case, the battery cell 110 may be formed in a rectangular sheet-like structure.

Such battery cells 110 may be configured in a plurality of numbers, and the plurality of battery cells110 are stacked so as to be electrically connected to each other, thereby forming a battery cell stack 120. In particular, a plurality of battery cells 110 may be stacked along a direction parallel to the y-axis as shown in FIG.6.

The module frame 200 can be intended to protect the battery cell stack 120 and the electrical components connected thereto from external physical impacts. The module frame 200 may house the battery cell stack 120 and the electrical components connected thereto in the internal space of the module frame 200.

The structure of the module frame 200 may have various shapes. According to the present figure, the structure of the module frame 200 may be a mono frame structure. The mono frame can be manufactured by extrusion molding.

However, the structure of the module frame 200 is not limited thereto, and in another example, the module frame 200 may have a structure in which a U-shaped frame and an upper plate are coupled. In this case, the U-shaped frame may be formed such that the lower surface and both side surfaces of the module frame 200 are coupled and integrated. At this time, each frame or plate constituting the U-shaped frame may be manufactured by press molding. Further, the structure of the module frame 200 may be provided in a mono frame or an L-shaped frame structure in addition to a U-shaped frame, and may be provided in various structures that are not described in the above-mentioned examples.

The module frame 200 may be provided in a shape opened along the longitudinal direction (x-axis direction) of the battery cell stack 120. In this case, the front surface and the rear surface of the battery cell stack 120 may be not hidden by a module frame 200. The front surface and the rear surface of the battery cell stack 120 may be hidden by a busbar assembly 300, a sealing assembly 400, an end plate 500 or the like, through which the front surface and the rear surface of the battery cell stack 120 will be able to be protected from external physical impacts or the like.

The side plate 230 is a plate-shaped member that covers the side surface of each electrically connected battery cell stack 120 with a single plate. When the battery cell stack 120 is inserted into the module frame 200, the side plate 230 can make the battery cell stacks to be easily inserted, thereby facilitating the process. The side plate 230 will be described in more detail in FIG. 7.

The fixing frame 240 may be located while covering at least one surface of the battery cell stack 120. The fixing frame 240 may be located while covering the lower portion of the battery cell stack 120, and more specifically, the fixing frame 240 may be located while covering the lower surface and a part of the side surface of the battery cell stack 120.

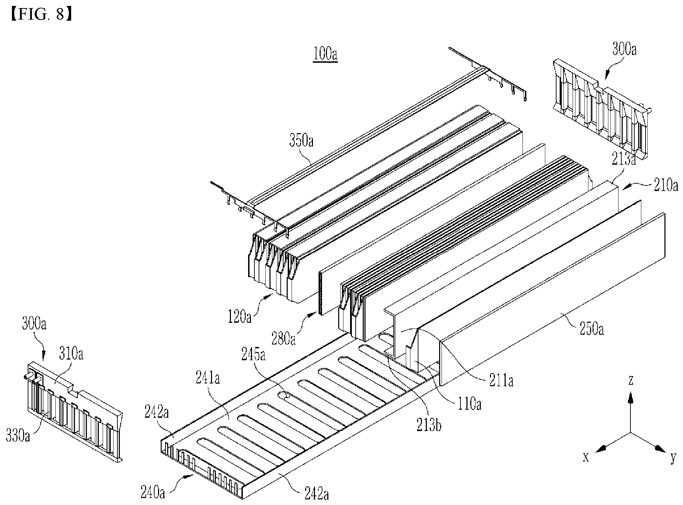

The fixing frame 240 is formed of a material having rigidity, and may serve to protect the battery cell stack 120 from external physical impact, and firmly fix and support them within the module frame 200. This will be described in more detail in FIGS. 7 and 8.

The busbar assembly 300 includes a busbar frame 310 and a busbar 330 mounted on one surface of the busbar frame 310, which will be described in more detail below in FIGS. 7 and 8.The busbar assembly 300 may be located on the opened first side (x-axis direction) and second side (-x-axis direction) of the module frame 200 to cover the battery cell stack 120. The busbar assembly 300 can electrically connect the battery cells 110 constituting the battery cell stack 120 in series or in parallel.

The sealing assembly 400 may be located on the opened first side (x-axis direction) and second side (-x-axis direction) of the module frame 200 and formed so as to cover the battery cell stack 120.The sealing assembly 400 located on the opened first side of the module frame 200 may be a first sealing assembly 410, and the sealing assembly 400 located on the opened second side of the module frame 200 may be a second sealing assembly 450.

The sealing assembly 400 may separate the opened first side and second side of the module frame 200 from the external environment. Specifically, when a coolant is injected into the module frame 200, the sealing assembly 400 may perform the function to seal the coolant so as to prevent it from leaking to the outside.

Specifically, the sealing assembly 400 may include a sealing cover and an inlet 421 through which coolant flows in and an outlet 461. Specifically, the coolant may flow into the module frame 200 via the inlet 421, and then be discharged to the outside of the battery module 100 via the outlet 461. The coolant may be in direct contact with a battery cell stack 120, other electrical components, and a busbar assembly 300 mounted inside the module frame 200, and receive transfer of heat generated therefrom. Namely, the coolant can cool the battery module 100 while moving inside the battery module 100.

The coolant may be a fluid. However, the coolant needs to be electrically insulated because it is in direct contact with the battery cell stack 120, other electrical components, and the busbar assembly 300 within the battery module 100.Therefore, the coolant may be a material that has insulating properties. In one example, the coolant may be an insulating oil.

As mentioned above, the coolant is in direct contact with the battery cell stack 120, other electrical components, and the busbar assembly 300 that generate heat within the battery module 100, and can directly cool them while receiving transfer of heat. Therefore, as compared to the conventional method of indirectly cooling the battery module using a heat sink or the like, the cooling efficiency of the battery can be improved, thereby extending the battery life.

The end plate 500 may be located on the opened first side (x-axis direction) and the second side (-x-axis direction) of the module frame 200, and formed so as to cover the sealing assembly 400. The end plate 500 located on the opened first side of the module frame 200 may be a first end plate 510, and the end plate 500 located on the opened second side of the module frame 200 may be a second end plate 550.

Such an end plate 500 may physically protect the battery cell stack 120 and other electrical components from external impacts.

Next, each sub-module constituting the battery module 100 of the present embodiment will be described in more detail.

FIG. 7 is a perspective view of the battery module excluding the module frame of FIG. 5. FIG. 8 is an exploded view of a sub-module according to an embodiment of the present disclosure.

Referring to FIG. 7, the battery module 100 according to an embodiment of the present disclosure may include at least one sub-module. That is, the number of the sub-modules included in the battery module 100 in the present disclosure is not particularly limited. In an embodiment of the present disclosure, one sub-module may be included in the battery module 100, and in another embodiment, a plurality of sub-modules may be included in the battery module 100.

In one example, at least one sub-module may include a first sub-module 100a and a second sub-module 100b. Here, the battery module 100 may include a module in which a first sub-module 100a and a second sub-module 100b are electrically connected to each other. Furthermore, the first sub-module 100a and the second sub-module 100b may be arranged along the direction in which the electrode leads protrude from the battery cells.

The first sub-module 100a and the second sub-module 100b may each include battery cell stacks 120a and 120b in which a plurality of battery cells are stacked, busbar assemblies 300a and 300b including busbars 330a and 330b electrically connected with the battery cell stacks 120a and 120b and a busbar frame 310a covering the battery cell stacks 120a and 120b on at least one side, and fixing frames 240a and 240b covering at least one surface of a battery cell stacks 120a and 120b.

Since the first sub-module 100a and the second sub-module 100b each include the same configuration, the configurations included in the sub-modules 100a and 100b will be specifically described from the viewpoint of the first sub-module 100a.

Referring to FIG. 8, the first sub-module 100a includes a first battery cell stack 120a in which a plurality of battery cells 110a are stacked, a first busbar assembly 300a covering the front surface (x-axis direction) and the rear surface (-x-axis direction) of the first battery cell stack 120a, a first printed circuit board (PCB) 350a electrically connected to the first busbar assembly 300a, and a first fixing frame 240a covering at least one surface of the first battery cell stack 120a.

The first battery cell stack 120a is formed by stacking a plurality of first battery cells 110a. The first battery cell stack 120a includes a first compression pad 250a provided on one surface of a outermost first battery cell 110a. The first battery cell stack 120a also includes a first cooling fin 210a located between the plurality of first battery cells 110a, and between the first battery cell 110a and the first compression pad 250a.

The first cooling fin 210a may be located between a plurality of first battery cells 110a. For example, the first cooling fin 210a may be located between two first battery cells 110a. Specifically, another first cooling fin 210a adjacent to one first cooling fin 210a may be located with the two first battery cells 110a interposed between them. Alternatively, the first cooling fin 210a may also be located between the outermost first battery cell 110a and the first compression pad 250a.

In this case, the first cooling fin 210a may include a first plate 211a in contact with one side surface of the first battery cell 110a.Here, one side surface of the first battery cell 110a may be one surface of the battery cell 110 that extends along the longitudinal direction (x-axis direction) of the first battery cell 110a. One surface of the first plate 211a may be in contact with one surface of the first battery cell 110a that faces one surface of the first plate 211a.

The other surface of the first plate 211a may be in contact with one side surface of another adjacent first battery cell 110a or one surface of the first compression pad 250a.In this case, although not shown in this figure, an adhesive is interposed between one side surface of the first battery cell 110a and the first plate 211a, or between one surface of the first compression pad 250a and the first plate 211a, so that the first battery cell 110a and the first plate 211a can be adhesively fixed. For example, the adhesive may be an insulating tape.

The upper portion (z-axis direction) of the first plate 211a can be in contact with the upper surface (z-axis direction) of the module frame 200 of FIG. 5, and the lower portion (-z-axis direction) of the first plate 211a can be in contact with the lower surface (-z-axis direction) of the module frame 200 of FIG. 5. Therefore, the first cooling fin 210a can be fixed and located within the module frame 200, whereby the first battery cell 110a attached to the first cooling fin 210a can also be fixed and located within the module frame 200.

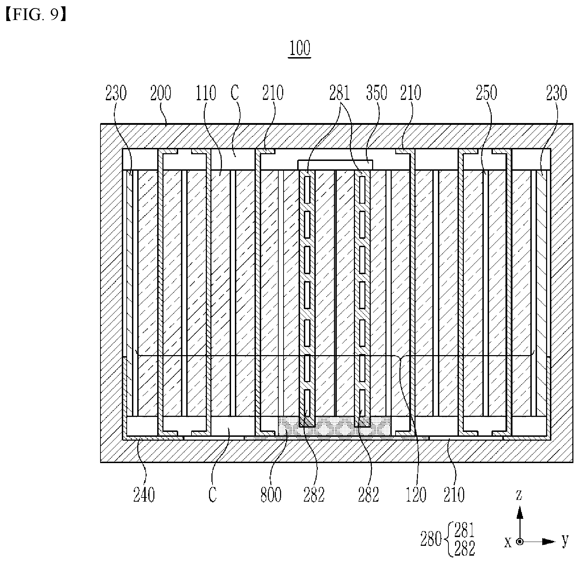

The size of the first plate 211a may be greater than the size of the first battery cell 110a.Specifically, referring to FIG. 9, the height (z-axis direction) of the first plate 211a may be greater than the height of the first battery cell 110a.In this case, the first battery cell 110a may be adhered onto the first plate 211a, and located so as to be floated in the inside of the module frame 200 without being in contact with the module frame 200. Specifically, the upper portion and the lower portion of the first battery cell 110a may be located while having a prescribed height from the upper portion and the lower portion of the module frame 200.More specifically, when the height (z-axis direction) of the first plate 211a is higher than the height (z-axis direction) of the first battery cell 110a, the first battery cell 110a may be adhesively fixed while being located at the central portion of the first plate 211a.

Referring again to FIG. 8, the first cooling fin 210a may further include a first plate 211a and a protrusion portions 213a and 213b protruding from an end of the first plate 211a. Specifically, the protrusion portions 213a and 213b may include a first protrusion portion 213a in which one end of the first plate 211a protrudes, and a second protrusion portion 213b in which the other end of the first plate 211a protrudes.

The first protrusion portion 213a and the second protrusion portion 213b may be configured to protrude in a direction perpendicular to the first plate 211a. Therefore, the first cooling fin 210a may have a ' 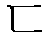 ' shape.

In this case, the first protrusion portion 213a may be in contact with the upper surface (z-axis direction) of the module frame 200 of FIG. 5, and the second protrusion portion 213b may be in contact with the lower surface (-z-axis direction) of the module frame 200 of FIG. 5. Specifically, one surface of the first protrusion portion 213a may be in contact with the upper surface of the module frame 200 of FIG. 5, and the other surface of the first protrusion portion 213a can be located while facing the upper surface of the first battery cell 110a.The other surface of the second protrusion portion 213b may be in contact with the lower surface (-z-axis direction) of the module frame 200 of FIG. 5, and one surface of the second protrusion portion 213b may be located while facing the lower surface of the first battery cell 110a. Consequently, the first cooling fin 210a may be more firmly fixed and located within the module frame 200.

However, the shape of the first cooling fin 210a is not limited to those illustrated in this figure, and may be a flat plate shape, or an 'L' shape in which a protrusion portion is located only at one end or the other end of the first plate 211a. That is, the first cooling fin 210a can have any shape as long as it can fix the first battery cell 110a while being in contact with the first battery cell 110a.

The first cooling fin 210a may be a metal. Specifically, the first cooling fin 210a may be a metal having high thermal conductivity.

The first cooling fin 210a can directly receive transfer of heat generated from the first battery cell 110a due to charging and discharging of the battery. When heat is generated, heat may be transferred to the first cooling fin 210a in contact with the side surface of the first battery cell 110a to perform a primary cooling, and a coolant may be in direct contact with the upper portion and the lower portion of the first battery cell 110a to perform a secondary cooling. Thereby, direct cooling is possible not only for the side area of the battery cell, but also for the upper edge and lower edge areas of the battery cell, which were relatively difficult to cool in a conventional case, thereby improving the cooling efficiency of the battery.

The first compression pad 250a may be located at the outermost portion of the first battery cell stack 120a. When the first battery cell 110a swells due to charging and discharging, the first compression pad 250a may perform the function to absorb the swelling. Specifically, the first compression pad 250a may push the side surface portion (y-axis direction and -y-axis direction) of the module frame 200 of FIG. 5 while the first battery cell 110a is swelling, thereby preventing the battery case of the first battery cell 110a from being cracked, and thus enhancing the safety of the battery.

However, the first compression pad 250a is not limited to being located only on the outermost portion of the first battery cell stack 120a, and may also be located between the first battery cells 110a constituting the first battery cell stack 120a.

The first busbar assembly 300a includes a first busbar frame 310a, and a first busbar 330a mounted on the first busbar frame 310a.

The first busbar frame 310a may be located on one surface of the first battery cell stack 120a to cover one surface of the first battery cell stack 120a and, at the same time, guide a connection between the first battery cell stack 120a and an external device. The first busbar frame 310a may be located on the front surface(x-axis direction) and the rear surface(-x-axis direction) of the first battery cell stack 120a.A first busbar 330a may be mounted on the first busbar frame 310a. Specifically, the inner surface of the first busbar frame 310a may be connected to the front surface (x-axis direction) and the rear surface (-x-axis direction) of the first battery cell stack 120a, and the outer surface of the first busbar frame 310a may be connected to the first busbar 330a.

The first busbar frame 310a may include a material that is electrically insulating. The first busbar frame 310a may limit contact of the first busbar 330a with other portions of the first battery cells 110a other than the portion joined with an electrode lead (not shown), and may also prevent occurrence of an electrical short circuit.

The first busbar 330a is mounted on one surface of the first busbar frame 310a, and may electrically connect the first battery cell stack 120a or the first battery cells 110a to an external device circuit. The first busbar 330a is located on the first busbar frame 310a, and the first busbar assembly 300a is covered from the sealing assembly 400 and the end plate 500 of FIG. 5, thereby being able to be protected from external impacts, etc., and minimizing deterioration of the durability due to external moisture or the like.

The first busbar 330a can be electrically connected to the first battery cell stack 120a via the electrode lead of the first battery cell 110a. Specifically, the electrode lead of the first battery cell 110a may pass through a slit formed in the first busbar frame 310a and then be bent to connect to the first busbar 330a.The first battery cells 110a constituting the first battery cell stack 120a can be connected in series or in parallel by the first busbar 330a.

The first printed circuit board 350a extends in the longitudinal direction of the first battery cell stack 120a, and is mounted on one surface of the first battery cell stack 120a to sense the first battery cell 110a.Specifically, as shown in FIGS. 7 and 8, the first printed circuit board 350a can be located while being in contact with a battery cell located at the central portion of the first battery cell stack 120a among the battery cells forming the first battery cell stack 120a.The first printed circuit board 350a is seated on the upper surface (z-axis direction) of the first battery cell stack 120a to sense electrical and thermal data of the first battery cell 110a. In addition, the first printed circuit board 350a is electrically connected to the first busbar 330a while being bent toward the first busbar frame 310a at the end of the first battery cell stack 120a.

In this case, the first cooling fin 210a cannot be provided between the first battery cell 110a on which the first printed circuit board 350a is mounted. This is because when the first cooling fin 210a is provided between the first battery cell 110a, the first cooling fin 210a may be located to overlap the first printed circuit board 350a.Therefore, a cooling spacer 280a may be located instead of the first cooling fin 210a in the area where the first printed circuit board 350a is located, which will be described in more detail in FIG. 9.

The first fixing frame 240a may be provided on the other surface of the first battery cell stack 120a opposite to one surface of the first battery cell stack 120a on which the first printed circuit board 350a is mounted.

The first fixing frame 240a includes a first fixing plate 241a covering the other surface, which is at least one surface of the first battery cell stack 120a, and a first side cover portion 242a covering a part of a side surface located vertically with the other surface, which is at least one surface of the first battery cell stack 120a.

According to this figure, the first fixing frame 240a includes a first fixing plate 241a that covers the lower surface of the first battery cell stack 120a, and a first side cover portion 242a that covers a part of the side surface of the first battery cell stack 120a. In the following, at least one surface of the first battery cell stack 120a in contact with the first fixing plate 241a will be referred to as the lower surface of the first battery cell stack 120a for convenience.

The first fixing plate 241a may cover the lower surface of the first battery cell stack 120a while having a size corresponding to the size of the lower surface of the first battery cell stack 120a. Specifically, the size of the first fixing plate 241a may be equal to the size of the lower surface of the first battery cell stack 120a, or may be greater than the size of the lower surface of the first battery cell stack 120a.In this case, the size of the first fixing plate 241a and the size of the lower surface of the first battery cell stack 120a may have an error range of around 10%.

The first fixing plate 241a may include a plurality of first fixing holes 245a penetrating the first fixing plate 241a. Specifically, the first fixing plate 241a includes a first fixing hole 245a formed long in a stacking direction of the first battery cell 110a, wherein a plurality of the first fixing holes 245a may be formed and located in the longitudinal direction of the first battery cell 110a.The first fixing hole 245a may be elliptical.

In the first fixing hole 245a, an excess amount of adhesive may be located between the first fixing plate 241a and the first battery cell stack 120a. Therefore, the module frame, the first fixing frame 240a and the first battery cell stack 120a may be connected by a single adhesive, thereby improving the adhesive strength and structural stability between them. More details will be described in FIG. 9 and subsequent figures.

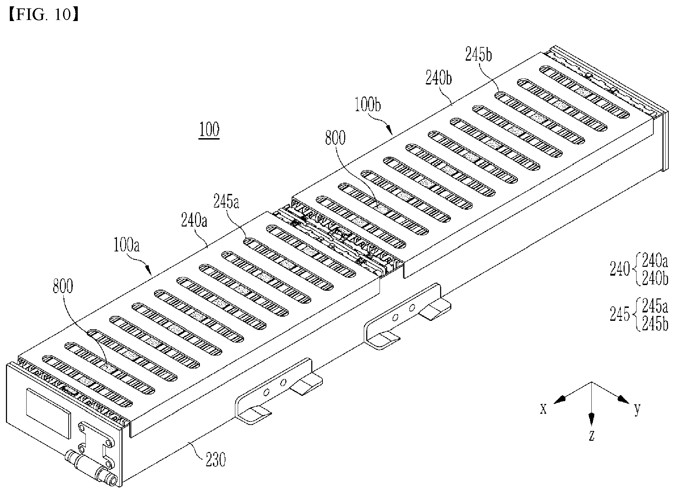

The first side cover portion 242a may be an area that protrudes vertically in the height direction of the first battery cell stack 120a along the edge of the first fixing plate 241a. The first side cover portion 242a may be located while surrounding the side surface of the first battery cell stack 120a, and may be located while being coupled with the side plate 230 (see FIG. 10). Therefore, the first fixing frame 240a, the first battery cell stack 120a, and the side plate 230 may all be more firmly fixed and located, thereby achieving mechanical stability.

The first sub-module 100a and the second sub-module 100b including the above configuration are electrically connected to each other to form one battery module 100.

One battery module 100 may include a side plate 230, which is a plate-shaped member covering the side surfaces of the first sub-module 100a and the second sub-module 100b.

Referring to FIG. 7, the side plate 230 may be a plate that extends along the longitudinal direction (x-axis direction) of the battery module 100. Specifically, the length of the side plate 230 may correspond to the length of the battery module 100. Furthermore, the length of the side plate 230 may correspond to the sum of the lengths of the first sub-module 100a and the second sub-module 100b. Here, the phrase "length corresponds" may mean that the length is the same as the length of the battery module or has an error range of around 10% from the same value.

The side plate 230 may be located while facing the outermost first battery cell 110a of the first sub-module 100a and the outermost second battery cell 110b of the second sub-module 100b constituting the battery module 100. Alternatively, the side plate 230 may be located while facing the first compression pad 250a of the first sub-module 100a and the second compression pad 250b of the second sub-module 100b constituting the battery module 100.

The side plate 230 may be a metal having rigidity. The side plate 230 may serve to protect the outermost battery cells 110a and 110b or the compression pads 250a and 250b of the first sub-module 100a and the second sub-module 100b, when the first sub-module 100a and the second sub-module 100b are inserted and mounted in the module frame 200.

In addition, the battery cell stacks 120a and 120b constituting the battery module 100 of the present embodiment are electrically connected to general battery cell stacks inserted into a conventional battery module, and have a longer overall length than general battery cell stacks, so that it may not be easy to insert them into the module frame 200 and assemble them. In this case, the side plate 230 guides the battery cell stacks 120 constituting the battery module 100 of the present embodiment to be inserted into the module frame 200, thereby making it easy to assemble the battery module without damage to the battery cells 110 and the compression pads 250a and 250b.

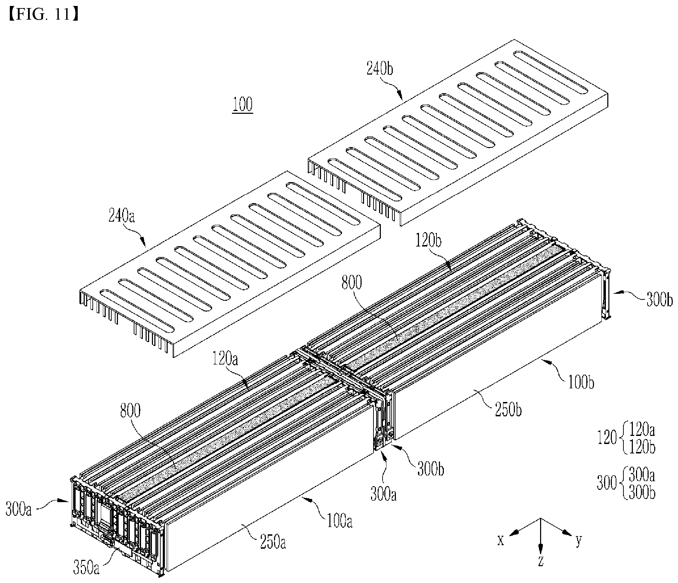

FIG. 9 is a cross-sectional view taken along line B-B' of FIG. 5. FIG. 10 is a perspective view of the battery module excluding the module frame of FIG. 5. FIG. 11 is an exploded perspective view of FIG. 10.

Referring to FIG. 9, a battery module 100 according to an embodiment of the present disclosure includes a cooling fin 210 and a cooling spacer 280 provided between a plurality of battery cells 110. Since the cooling fin 210 has the same configuration as the first cooling fin 210a described in FIG. 8, a description thereof will be omitted below.

The cooling spacer 280 may be located between the battery cells 110 located at the central portion of the battery cell stack 120. Specifically, the cooling spacer 280 may be located in an area corresponding to an area where the printed circuit board 350 is located. In this case, the cooling spacer 280 may be located between the battery cells 110 in contact with the printed circuit board 350 and may receive transfer of heat generated from the battery cells 110 to cool them.

The cooling spacer 280 may include a cooling plate 281 which is a plate extending in the longitudinal direction (x-axis direction) of the battery cells 110 and a plurality of cooling holes 282 penetrating the cooling plate 281.

The cooling plate 281 may be a plate which is in contact with one surface of the battery cells 110 located at the central portion of the battery cell stack 120. Specifically, one surface of the cooling plate 281 may be in contact with one surface of the battery cell 110 that faces one surface of the cooling plate 281.The other surface of the cooling plate 281 may be in contact with one surface of the battery cell 110 that faces the other surface of the cooling plate 281.In this case, although not shown in this figure, an adhesive is interposed between one surface of the battery cell 110 and one surface of the cooling plate 281, and the other surfaces of the adjacent battery cell 110 and the cooling plate 281,so that the battery cell 110 and the cooling plate 281 can be adhesively fixed. For example, the adhesive member can be an insulating tape.

The cooling plate 281 may have a size corresponding to the size of the battery cell 110. Specifically, the area of the cooling plate 281 may correspond to the area of one side surface of the battery cell 110.More specifically, the length of the cooling plate 281 may be equal to the length of the battery cell 110, and the height of the cooling plate 281 may be equal to or greater than the height of the battery cell 110.When the height of the cooling plate 281 is greater than the height of the battery cell 110, the battery cell 110 may be attached onto the cooling plate 281 and located so as to be floated in the inside of the module frame 200 without being in contact with the module frame 200.

The cooling hole 282 may be a hole that penetrates the cooling plate 281 in the longitudinal direction (x-axis direction) of the cooling plate 281. The cooling hole 282 may be a hole that is provided in plural numbers spaced apart in the height direction (z-axis direction) of the cooling plate 281.

A coolant can move between the cooling holes 282. In this case, the coolant moves while receiving transfer of heat generated from the battery cells 110, so the battery cells 110 in the central portion of the battery cell stack 120 can be effectively cooled. Therefore, compared to a conventional battery module not provided with a cooling spacer 280, the battery cooling efficiency is improved, and the cooling deviation between the battery cells 110 can be reduced.

The cooling spacer 280 can be formed of a metal. Specifically, the cooling spacer 280 may be a metal having high thermal conductivity. Therefore, the cooling spacer 280 can directly receive transfer of heat generated from the battery cell 110 due to charging and discharging of the battery, so that the battery cell 110 in the area where the printed circuit board 350 is located can be placed in an improved state of the cooling performance like other battery cells 110, so that the temperature deviation within the battery module can be reduced.

Referring to FIGS. 9 to 11, a coolant C can flow in the space between the upper and lower portions of the module frame 200 and the upper and lower portions of the battery cell stack 120 to absorb heat generated from the battery cell 110, and an adhesive member 800 can be located in one space of the battery cell stack 120 to fix the module frame 200 and the battery cell stack 120. Specifically, the adhesive member 800 can be located on the other surface of the battery cell stack 120 opposite to one surface of the battery cell stack 120 where the printed circuit board 350 is located. More specifically, the adhesive member 800 may be located on the battery cells 110 located while being in contact with the printed circuit board 350, and also may be located while being in contact with one end of the cooling spacer 280.

Therefore, even if the cooling spacer 280 and the battery cells 110 in contact therewith are located so as to be floated within the module frame 200, the adhesive member 800 can serve to fixedly adhere them to the module frame 200, thereby improving the adhesive strength and structural stability.

The adhesive member 800 can be formed of a resin. For example, the adhesive member 800 can be formed of a resin or the like. When the adhesive member 800 is in contact with other components, it may then be cured and adhered to the other component to fixedly support them.

Specifically, the adhesive member 800 is a dispensing type, which can be formed by being applied along the central portion of the battery cell stack 120 and then cured. The adhesive member 800 may be located at the lower portion of the battery cell stack 120 along the longitudinal direction (x-axis direction) of the battery cell stack 120.Specifically, the adhesive member 800 may be located while contacting the other end of the battery cells 110 that contact the printed circuit board 350.More specifically, the adhesive member 800 may be located while contacting the lower end of the battery cells 110 that contact the cooling spacer 280.

The adhesive member 800 can be applied onto the battery cell stack 120 in a state where the battery cell stack 120 is turned upside down. That is, the adhesive member 800 may be applied on the other surface of the battery cell stack 120 while the other surface of the battery cell stack 120 is placed in a direction opposite to gravity. Then, the fixing frame 240 may be located on the lower surface of the battery cell stack 120.

In other words, the adhesive member 800 may be located on the other surfaces of the battery cell stacks 120a and 120b that constitute the first sub-module 100a and the second sub-module 100b, and the fixing frame 240 may be located while covering the other surfaces of the battery cell stacks 120a and 120b to which the adhesive member 800 is applied.

In this case, if the fixing frame 240 is located while an excessive amount of the adhesive member 800 is applied to the battery cell stacks 120a and 120b, the adhesive member 800 may partially overflow through the fixing hole 245. Specifically, when the first sub-module 100a and the second sub-module 100b of FIG. 10 and FIG. 11 are inserted and located in the module frame 200, the adhesive member 800 partially overflows through the fixing hole 245 and comes into contact with the module frame 200. Consequently, the battery cell stack 120, the fixing frame 240, and the module frame 200 can be adhesively fixed at one time. That is, due to the above structure, the adhesive member 800 is located while being in contact with the battery cell stack 120, the fixing frame 240, and the module frame 200 at one time, and is located while having a wider surface area within the battery module 100,so that they can be more firmly fixed within the module frame 200.

Therefore, even if an impact is applied to the battery module 100 from the outside, the first sub-module 100a and the second sub-module 100b are not separated from the module frame, thereby improving the safety and mechanical reliability of the battery.

In addition, the adhesive member 800 is applied and located only at the central portion of the battery cell stack 120, whereby even if an excessive amount of the adhesive member 800 overflows through the fixing hole 245 of the fixing frame 240 and comes into contact with the module frame 200,only a part of the module frame 200 exposed by the fixing hole 245 can come into contact with the adhesive member 800. Therefore, even if the adhesive member 800 is located on the battery cell stack 120, unlike the conventional battery module 10 of FIG. 2, the space between the battery cell stack 120 and the module frame 200 is secured, thereby facilitating the movement of the coolant C. That is, the battery module 100 according to an embodiment of the present disclosure can ensure the coupling force and mechanical stability between the first sub-module 100a and the second sub-module 100b and the module frame 200 compared to the conventional battery module. In addition, by allowing the coolant C to move to areas where the adhesive member 800 does not contact the module frame 200 and securing a flow path, the cooling efficiency of the battery can be improved and the cooling deviation between the battery cells can also be reduced.

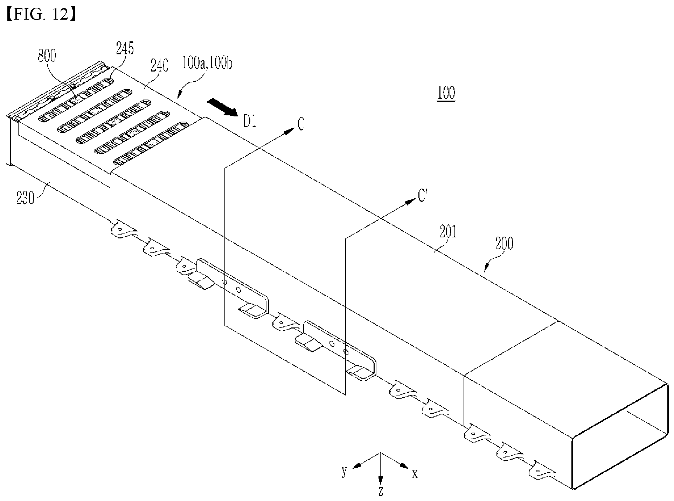

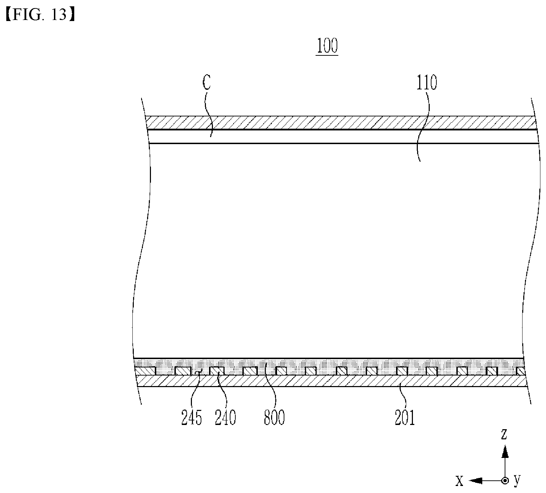

FIG. 12 is a diagram showing that the sub-modules of FIG. 10 is inserted into the module frame. FIG. 13 is a cross-sectional view taken along line C-C' of FIG. 12.

Referring to FIG. 12, the first sub-module 100a and the second sub-module 100b can be inserted and mounted in a module frame 200 in an upside-down state.

Specifically, an adhesive member 800 is applied along the central portion of one surface (-z-axis direction) of a battery cell stack constituting the first sub-module 100a and the second sub-module 100b of the present disclosure in the longitudinal direction of the battery cell, and a fixing frame 240 is located at the lower portion of the first sub-module 100a and the second sub-module 100b, respectively, and the first sub-module 100a and the second sub-module 100b can be inserted into the module frame 200.In this case, the first sub-module 100a and the second sub-module 100b can be inserted into the module frame 200 along the first direction D1 in an upside-down state so that the adhesive member 800 does not flow down.

That is, when the first sub-module 100a and the second sub-module 100b are inserted into the module frame 200, the surfaces of the first sub-module 100a and the second sub-module 100b onto which the adhesive member 800 is applied can be located facing the module frame 200. Specifically, the surfaces of the first sub-module 100a and the second sub-module 100b onto which the adhesive member 800 is applied may be located facing the bottom portion 201 of the module frame 200. That is, in this case, both the surface onto which the adhesive member 800 is applied and the bottom portion 201 of the module frame 200 can be located facing the direction opposite to gravity.

Thereafter, referring to FIG. 13, after the first sub-module 100a and the second sub-module 100b are inserted into the module frame 200, the battery module 100 of FIG. 12 can be turned over so that the adhesive member 800 can be more firmly adhered to the bottom portion 201.That is, after the sub-modules 100a and 100b to which the adhesive member 800 is applied are inserted into the module frame 200, they are turned over so that the adhesive member 800 flows down, thereby allowing the battery cell stack to be more firmly adhered to the bottom portion 201. At this time, the bottom portion 201 of the module frame 200 and the adhesive member 800 can be in a state located toward the direction of gravity.

Specifically, in the battery module 100 of FIG. 13, the adhesive member 800 moves in the direction of gravity toward the bottom portion 201. In this case, the area where the adhesive member 800 is in contact with the bottom portion 201 may increase in the state of FIG. 13 than in the state of FIG. 12. More specifically, the adhesive member 800 may be located in contact with the bottom portion 201 of the module frame 200 while moving in the direction of gravity through the fixing hole 245.

At this time, since the adhesive member 800 is located only in the central portion of the first sub-module 100a and the second sub-module 100b, the adhesive member 800 can be located only in a part of the center of the bottom portion 201 of the module frame 200 corresponding to the fixing hole 245. Therefore, since the adhesive member 800 is not located in the entire area of the bottom portion 201 of the module frame 200,it is possible to secure the fixing force between the first sub-module 100a and the second sub-module 100b and the module frame 200, and also to secure the movement path of the coolant.

**In** other words, the adhesive member 800 can be in contact with the battery cell stack, the fixing frame 240, and the module frame 200 at the same time, thereby increasing the fixing force between them. Consequently, the sub-modules 100a and 100b can be fixed more firmly to the module frame 200, which reduces the risk of damage such as separation due to external impact, thereby improving the safety of the battery. Furthermore, since the sub-modules do not move within the module frame 200, the battery cells and other electrical components may not be damaged.

That is, due to this, the mechanical structure of the battery module 100 is reinforced, and the mechanical reliability of the battery can be improved. In detail, when an impact is applied to the battery module 100 from the outside, the area of the components that are adhesively fixed between the module frame 200 and the sub-modules is secured, and the fixing force is improved, thereby enhancing the structural stability.

In addition, the movement path of the coolant C, which is the space between the upper and lower portions of the battery cell stack and the upper and lower portions of the module frame, is also secured, whereby the fixing force for the sub-modules 100a and 100b within the module frame 200 is secured, and the flow path of the coolant C is also secured, thereby ensuring the cooling performance.

The above-mentioned battery module and battery pack including the same can be applied to various devices. Such devices can be applied to vehicle means such as an electric bike, an electric vehicle, and a hybrid electric vehicle, but the present disclosure is not limited thereto, and also can be applied to various devices capable of using the battery module and the battery pack including the same, which falls within the scope of the present disclosure.

Although the invention has been described in detail above with reference to preferred embodiments thereof, it will be appreciated by those skilled in the art that the scope of the present disclosure is not limited thereto, and various modifications and improvements can be made in these embodiments without departing from the principles and sprit of the invention, the scope of which is defined in the appended claims and their equivalents.

### [Description of Reference Numerals]

100: battery module
100a: first sub-module
100b: second sub-module
110: battery cell
120: battery cell stack
200: module frame
240: fixing frame
245: fixing hole
280: cooling spacer
281: cooling plate
282: cooling hole
300: busbar assembly
800: adhesive member

## Claims

1. A battery module comprising:
at least one sub-modules that comprises a battery cell stack in which a plurality of battery cells are stacked, and a busbar assembly containing a busbar electrically connected to the battery cell stack and a busbar frame covering the battery cell stack from at least one side, respectively;
a module frame in which at least one of the sub-module is housed; and
a fixing frame that is located while covering at least one surface of the battery cell stack.

2. The battery module according to claim 1, wherein:
the at least one sub-modules include a first sub-module and a second sub-module electrically connected to each other.

3. The battery module according to claim 2, wherein:
one end of the first sub-module and the other end of the second sub-module are electrically connected to each other.

4. The battery module according to claim 2, wherein:
the battery module comprises an adhesive member located on one surface of the battery cell stack.

5. The battery module according to claim 4, wherein:
the fixing frame is located on the one surface of the battery cell stack to which the adhesive member is applied.

6. The battery module according to claim 5, wherein:
the fixing frame comprises a fixing plate covering the one surface of the battery cell stack,
wherein the fixing plate comprises a plurality of fixing holes penetrating the fixing plate.

7. The battery module according to claim 6, wherein:
the fixing holes are formed long in a stacking direction of the battery cells, and are located in plural numbers in the longitudinal direction of the battery cells.

8. The battery module according to claim 5, wherein:
the fixing frame further comprises a side cover portion that covers a surface located vertically with the one surface of the battery cell stack, and
the side cover portion is an area that protrudes perpendicularly in the height direction of the battery cell stack along an edge of the fixing plate.

9. The battery module according to claim 4, wherein:
the adhesive member is located at the central portion of the one surface of the battery cells.

10. The battery module according to claim 6, wherein:
when the first sub-module and the second sub-module are inserted into the module frame, the one surface of the battery cell stacks where the adhesive member is located is located toward a direction opposite to gravity.

11. The battery module according to claim 10, wherein:
after the first sub-module and the second sub-module are inserted into the module frame, the module frame is turned upside down so that a bottom portion of the module frame and the adhesive member are located toward the direction of gravity, and
the adhesive member is fixedly adhered to the bottom portion of the module frame.

12. The battery module according to claim 11, wherein:
the adhesive member moves through the fixing hole penetrating the fixing frame to be fixedly adhered to the bottom portion of the module frame.

13. The battery module according to claim 4,
further comprising a cooling spacer provided between the battery cells.

14. The battery module according to claim 13, wherein:
the cooling spacer comprises,
a cooling plate which is a plate extending in the longitudinal direction of the battery cells, and
a plurality of cooling holes penetrating the cooling plate.

15. The battery module according to claim 13, wherein:
a length of the cooling plate is equal to a length of the battery cells, and
a height of the cooling plate is equal to or greater than a height of the battery cells.

16. The battery module according to claim 1, comprising:
a sealing assembly covering both open ends of the module frame; and
an end plate covering the sealing assembly,
wherein the sealing assembly includes an inlet and an outlet through which a coolant flows into the module frame and flows out of it, and
wherein the coolant comes into direct contact with the battery cell stack and other electrical components housed within the module frame.

17. A battery pack comprising the battery module according to claim 1.
